# DEMANDE DE BREVET EUROPEEN

(11) **EP 0 006 817 A1**
(43) Date de publication de la demande: **09.01.1980**
(21) Numéro de dépôt: 79400440.8
(22) Date de dépôt: 29.06.1979
(51) Int. Cl.: G01L 9/00, G01L 13/00

(54) **Dispositif de mesure de pression fonctionnant en numérique**

(30) Priorité: 30.06.1978 FR 7819575; 18.07.1978 FR 7821215
(71) Demandeur: MECILEC Société Anonyme française, F-75008 Paris (FR)
(72) Inventeur: Guillemot, Philippe, F-75014 Paris (FR)
(74) Mandataire: Tony-Durand, Serge (FR)

(57) **Abrégé**

Dispositif de mesure de pression fonctionnant en numérique. Ce dispositif comprend:
- une première chambre (70) soumise à la pression à mesurer;
- une seconde chambre (72) soumise à une pression de référence et réunie à la première par au moins une ouverture (74) munie d'un clapet (78);
- un moyen de mesure (82) de l'écart, en grandeur et en signe, entre les pressions qui règnent respectivement dans la première et la seconde chambres, ce moyen délivrant un signal électrique fonction dudit écart;
- un circuit de détection (84) des instants où ledit écart atteint un incrément +ΔP ou un décrément -AP prédéterminés, et de détection des instants où cet écart devient nul:
- un moyen (80) relié audit circuit (84) et apte à commander l'ouverture du ou des clapets (78) lorsque l'écart atteint les valeurs ±ΔP et à commander la fermeture du ou des clapets lorsque cet écart devient nul;
- un moyen de comptage-décomptage (86, 88) relié audit circuit et apte à comptabiliser le nombre d'incréments +ΔP obtenus diminué du nombre de décréments -AP obtenus.

Application à la réalisation de capteurs de pression utilisables dans les gaz ou les liquides.

## Description

La présente invention a pour objet un dispositif de mesure de pression fonctionnant en numérique. Elle trouve une application dans la réalisation de capteurs de pression utilisables dans les gaz ou les liquides, mais aussi dans la conception de capteurs de force, de déplacement, d'accélération, etc...L'invention trouve une application privilégiée dans la réalisation de capteurs de pression pouvant remplacer les manomètres utilisés actuellement sur les chantiers de forages sous-marins et également dans la réalisation d'appareils de mesure de la pronfondeur d'immersion ("profondimètres") d'un plongeur sous-marin.

La plupart des appareils connus de mesure de pression comprennent une enceinte soumise à une pression de référence fixe, et un interface déformable en contact avec le fluide dont on veut mesurer la pression. L'exemple le plus simple et le plus caractéristique à cet égard est le manomètre à membrane, avec sa capsule à paroi déformable.

Ces appareils présentent plusieurs inconvénients dont les deux principaux sont les suivants:

Tout d'abord, l'existence d'une enceinte à pression partielle fixe entraîne, pour l'interface, des contraintes de plus en plus grandes lorsque la pression à mesurer s'élève. La plage de fonctionnement de ces appareils est donc nécessairement limitée en valeur supérieure. Ensuite, par construction même, ces appareils ne peuvent délivrer qu'un signal de caractère analogique : déviation d'une aiguille, amplitude d'un signal électrique, hauteur d'une colonne de liquide, etc... Or, on a recours aujourd'hui, de plus en plus fréquemment, à des signaux de nature numérique, soit que l'on veuille afficher le résultat de la mesure directement en numérique, soit que l'on doive effectuer un traitement préalable à l'aide de moyens de calcul qui, sauf exception rarissime, fonctionnent en numérique. Les appareils de l'art antérieur doivent donc être associés à des convertisseurs analogique-numérique ce qui, évidemment, grève le coût et les caractéristiques des matériels.

La présente invention a justement pour objet un dispositif de mesure de pression qui évite ces inconvénients, car sa gamme d'utilisation n'est pas limitée en valeur supérieure et le signal qu'il délivre est directement disponible en numérique.

Ce but est atteint, selon l'invention, par l'utilisation d'une chambre où règne une pression de référence variable (et non plus fixe, comme dans l'art antérieur) cette pression suivant, par incréments ou décréments successifs, les variations de la pression à mesurer. Selon l'invention, on mesure alors le nombre d'incréments ou de décréments subis par la pression de référence, nombre qui donne la variation de pression par rapport à la valeur initiale. Il est clair qu'un tel moyen remédie aux deux inconvénients mentionnés plus haut, puisque d'une part, il évite qu'un déséquilibre important s'établisse entre la pression à mesurer et la pression de référence, ce qui supprime par conséquent les contraintes, et d'autre part, il délivre directement l'information recherchée sous forme d'un nombre.

De façon plus précise, la présente invention a pour objet un dispositif de mesure de pression, caractérisé en ce qu'il comprend :
- une première chambre soumise à la pression à mesurer,
- une seconde chambre soumise à une pression de référence et réunie à la première par au moins une ouverture munie d'un clapet,
- un moyen de mesure de l'écart, en grandeur et en signe, entre les pressions qui règnent respectivement dans la première et la seconde chambres, ce moyen délivrant un signal électrique fonction dudit écart,
- un circuit de détection des instants où ledit écart atteint un incrément +ΔP ou un décrément - 6P prédéterminés, et de détection des instants où cet écart devient nul,
- un moyen relié audit circuit et apte à commander l'ouverture du ou des clapets lorsque l'écart atteint les valeurs ±ΔP et à commander la fermeture du ou des clapets lorsque cet écart devient nul,
- un moyen de comptage-décomptage relié audit circuit et apte à comptabiliser le nombre d'incréments + AP obtenus diminué du nombre de décréments - ΔP obtenus.

Les clapets utilisés peuvent être de tout type connu, dès l'instant que leur fonction est de provoquer la communication entre deux chambres lorsque l'écart entre les pressions qui y règnent atteint une valeur et un signe déterminés. Les clapets peuvent être par exemple d'un type purement mécanique et comprendre une pièce mobile appliquée sur une pièce fixe par un ressort ; mais ils peuvent être aussi de type magnétique et comprendre un aimant permanent et une pièce en matière magnétique. Ils peuvent être encore de type mixte, magnétique et mécanique. Enfin, ils peuvent être constitués par des moyens piezoélectriques associés à un ajutage .

Le moyen de mesure de l'écart, en grandeur et en signe, entre les pressions qui règnent respectivement dans la première et la seconde chambres et délivrant un signal fonction dudit écart peut être de tout type connu et être par exemple du type jauge de contrainte, piézoélectrique, piézorésistif, magnétique, etc...

La mise en forme des signaux électriques émis et leur comptage après mise en forme, ne pose pas de problème particulier à l'homme de métier, et tous les moyens aptes à cette fonction entrent dans le cadre de l'invention, notamment les dispositifs de comptage-décomptage binaires.

De toute façon,les caractéristiques et avantages de l'invention apparaîtront mieux après la description qui suit, d'exemples de réalisation donnés à titre explicatif et nullement limitatif. Cette description se réfère à des dessins annexés sur lesquels :
La figure 1 représente le schéma général du dispositif de l'invention,
La figure 2 illustre un mode particulier de réalisation du capteur de l'invention.

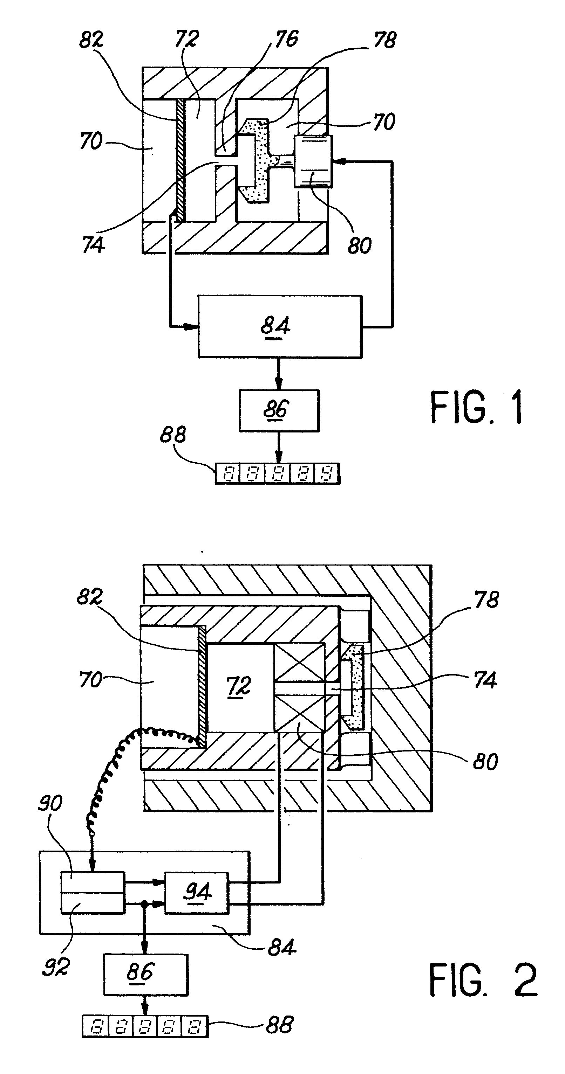

Le dispositif représenté sur la figure 1 comprend une première chambre 70 soumise à la pression Pₑ à mesurer, et une seconde chambre 72, soumise à une pression P , dite pression de référence. Cette seconde chambre est réunie à la première par une ouverture 74 percée dans une cloison 76. Cette ouverture est munie d'un clapet 78 dont l'ouverture est commandée par un moyen 80. Les chambres 70 et 72 sont séparées par un organe 82 qui est sensible à l'écart de pression entre les deux chambres. Cet organe est, par exemple, une jauge de contrainte ou une lame piézorésistive. Il délivre un signal électrique fonction dudit écart. Ce signal est dirigé sur un circuit de détection 84 apte à détecter les instants où l'écart de pression P - P atteint une valeur +ΔP ou une e r valeur - ΔP et les instants où cet écart est nul. Chaque fois que l'écart atteint l'une ou l'autre des valeurs ± ΔP le circuit 84 délivre un signal qui est appliqué sur les moyens 80 pour provoquer l'ouverture du clapet 78. Lorsque l'écart retombe à zéro, le circuit 84 délivre un signal apte à provoquer la fermeture du clapet. Le dispositif se complète par un compteur-décompteur 86 apte à comptabiliser le nombre d'incréments +ΔP diminué du nombre de décréments -AP observés lors des variations de la pression à mesurer. Le nombre obtenu est affiché, en grandeur et en signe, par un moyen d'affichage 88.

Le fonctionnement de ce dispositif est le suivant. A l'équilibre des pressions P et Pᵣ, le circuit 84 délivre un signal apte à maintenir le clapet 78 fermé. Les chambres 70 et 72 sont donc isolées l'une de l'autre. Lorsque la pression à mesurer P augmente, une différence de pression apparaît entre les deux faces du moyen 82 et un signal est reçu par le circuit 84. Par des moyens de comparaison bien connus, le circuit 84 détecte l'instant où cette différence de pression atteint la valeur +ΔP. A cet instant, il émet un signal appliqué sur le moyen 80 qui provoque l'ouverture du clapet 78. Les deux chambres 70 et 72 sont alors mises en communication par l'ouverture 74 et leurs pressions s'équilibrent. La pression de référence P augmente alors d'une quantité +AP et rejoint la pression P . L'écart P - Pᵣ retombe à zéro. L'instant où cet écart devient nul est détecté par le circuit 84, qui émet un signal de commande de fermeture du clapet 78. Le même processus se reproduit lors d'une nouvelle augmentation de la pression P d'une valeur +ΔP. Le compteur-décomp- teur 86 reçoit autant d'impulsions, avec un signe convenable, que le circuit 84 détecte d'incréments +ΔP.

Si la pression P vient à diminuer, un processus analogue se déroule, avec détection, cette fois, des instants où l'écart de pression P - P atteint la valeur - ΔP, le comp- teur-décompteur 86 recevant encore autant d'impulsions (mais avec un signe opposé) que le circuit 84 détecte de décréments -ΔP.

Le dispositif représenté sur la figure 2 est un mode particulier de réalisation, qui se caractérise essentiellement d'une part, par l'utilisation, comme moyen de commande du clapet 78, d'une bobine 80 alimentée en courant par le circuit 84, et d'autre part, par l'utilisation comme clapet d'un aimant permanent. Selon le sens du courant circulant dans la bobine 80, l'aimant constituant le clapet est attiré par la bobine (ce qui ferme l'ouverture 74 et isole les deux chambres 70 et 72) ou repoussé par celle-ci (ce qui dégage l'ouverture et met en communication les deux chambres).

Dans le mode de réalisation illustré sur la figure 2, le circuit 84 comprend deux circuits 90 et 92, respectivement de détection d'un écart de pression nul et d'un écart de pression égal à ± ΔP. Ces circuits commandent une source de courant 94 alimentant la bobine 80. L'organe 82 sensible à l'écart de pression peut être constitué par une jauge de contrainte disposée dans l'une des branches d'un pont de Wheatstone.

Le tableau suivant résume le fonctionnement du dispositif et indique l'état des organes essentiels dans les différentes situations. Ces organes sont référencés 90 (détection de zéro), 92 (détection de ± ΔP), 86 (compteur-décompteur), 94 (circuit d'alimentation de la bobine), 80 (bobine), 78 (clape ). Par convention, "1" signifiE "actif" ou "ouvert" et "0" signifie "passif" ou "fermé".

Ce tableau montre que dans les cas 3 et 7, c'est le moyen de détection de seuil 92 qui déclenche l'ouverture du clapet, le moyen 90 n'ayant pas d'influence ; dans les cas 5 et 9, c'est le moyen de détection de zéro 90 qui déclenche la fermeture du clapet, le moyen 92 n'ayant pas d'influence.

On voit, après cette description, que le capteur de l'invention présente un grand nombre d'avantages par rapport aux capteurs de l'art antérieur.
- son fonctionnement est intrinsèquement numérique et ne nécessite donc plus de convertisseur ;
- les contraintes auxquelles sont soumises les différentes pièces du dispositif sont au plus égales à L'écart ΔP, lequel est toujours très faible, et cela quelle que soit la valeur de la pression à mesurer ;
- s'il existe une limite inférieure à la plage de pression mesurable (limite égale à ΔP), en revanche, il n'existe pas de limite supérieure.

Mais,le dispositif objet de la présente invention, offre en plus, l'avantage de permettre un réglage de l'incrément ΔP par des moyens électroniques, ce qui, pratiquement, revient à régler des seuils de basculement, et ne pose aucun problème aujourd'hui. La part des organes mécaniques est donc réduite à son minimum, au profit de moyens électroniques beaucoup plus fiables et plus commodes d'emploi.

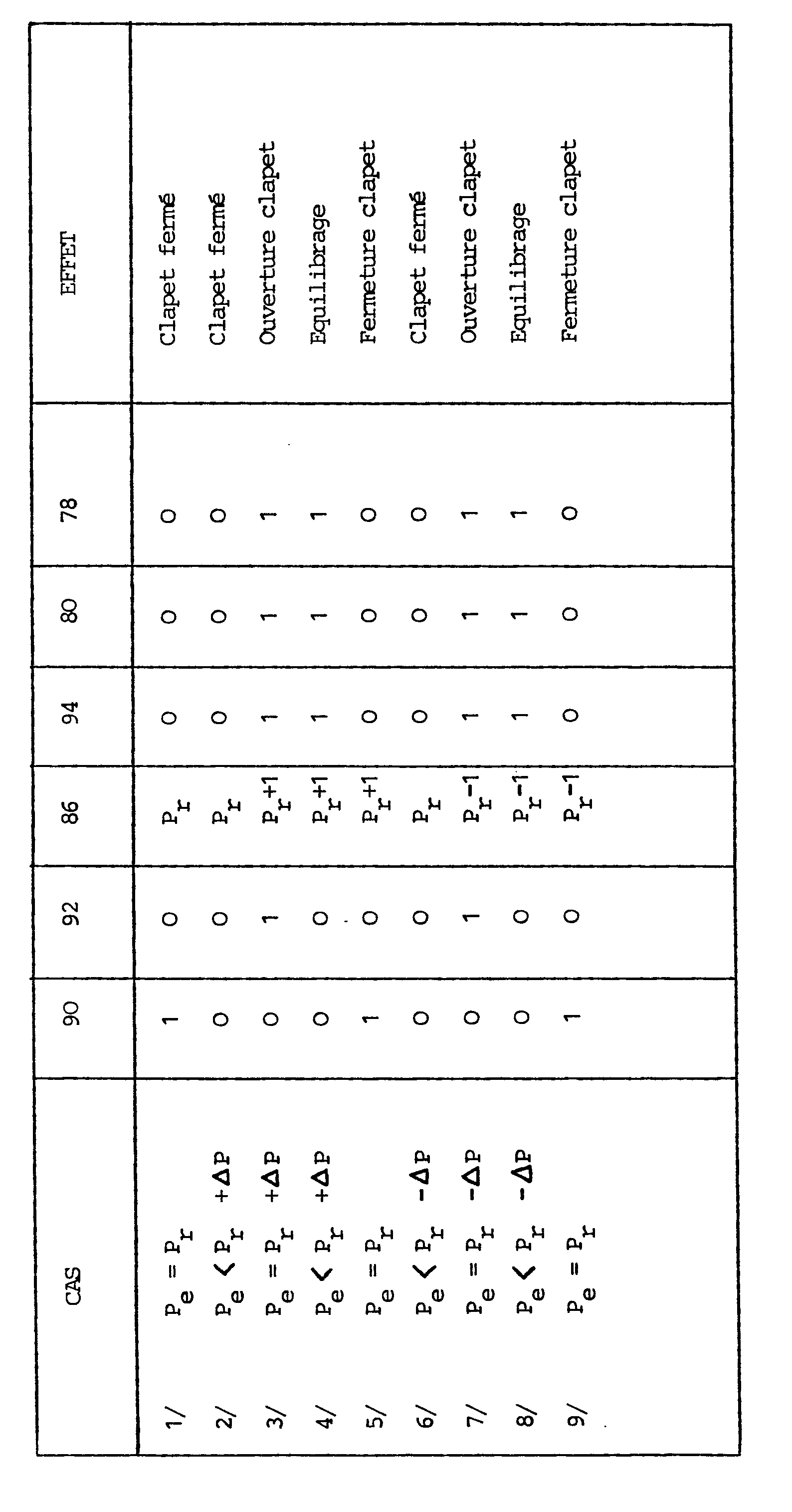

## Revendications

1. Dispositif de mesure de pression fonctionnant en numérique, caractérisé en ce qu'il comprend :
- une première chambre soumise à la pression à mesurer ;
- une seconde chambre soumise à une pression de référence et réunie à la première par au moins une ouverture munie d'un clapet ;
- un moyen de mesure de l'écart, en grandeur et en ;igne, entre les pressions qui règnent respectivement dans la première et la seconde chambres, ce moyen délivrant un signal électrique fonction dudit écart ;
- un circuit de détection des instants où ledit écart atteint un incrément + ΔP et un décrément - ΔP prédéterminés, et de détection des instants où cet écart devient nul ;
- un moyen relié audit circuit et apte à commander l'ouverture du ou des clapets lorsque l'écart atteint les valeurs ± ΔP et à commander la fermeture du ou des clapets lorsque cet écart devient nul ;
- un moyen de comptage-décomptage relié audit circuit et apte à comptabiliser le nombre d'incréments + ΔP obtenus diminué du nombre de décréments -ΔP obtenus.

2. Dispositif selon la revendication 1, caractérisé en ce que le moyen de commande d'ouverture et de fermeture du ou des clapets est constitué par un électroaimant alimenté par le circuit de détection, le ou les clapets étant constitués par un aimant permanent sollicité par ledit électroaimant.

3. Dispositif selon la revendication 1, caractérisé en ce que le ou les clapets sont constitués par un élément piézoélectrique associé à un ajutage.
